Europäisches Patentamt

European Patent Office

Office européen des brevets

(19)

(11) Numéro de publication: **0 013 203**
**B1**

(12) **FASCICULE DE BREVET EUROPEEN**

(45) Date de publication du fascicule de brevet: **14.10.81**

(51) Int. Cl.³: **F 16 J 15/52**

(21) Numéro de dépôt: **79400951.4**

(22) Date de dépôt: **04.12.79**

(54) Dispositif d'étanchéite pour assemblage oscillant

(30) Priorité: **08.12.78 FR 7835486**

(43) Date de publication de la demande:
**09.07.80 Bulletin 80/14**

(45) Mention de la délivrance du brevet:
**14.10.81 Bulletin 81/41**

(84) Etats Contractants Désignés:
**DE GB IT**

(56) Documents cités:
**DE - C - 879 496**
**DE - C - 893 761**

(73) Titulaire: **SOCIETE ANONYME AUTOMOBILES CITROEN**
**117 à 167, Quai André Citroen**
**F-75747 Paris Cedex 15 (FR)**
**AUTOMOBILES PEUGEOT**
**75, avenue de la Grande Armée**
**F-75116 Paris (FR)**

(72) Inventeur: **Herbreteau, Roger, Marcel**
**4, Quai de Stalingrad**
**F-92100 Boulogne Billancourt (FR)**

(74) Mandataire: **Boivin, Claude**
**9, rue Edouard-Charton**
**F-78000 Versailles (FR)**

Courier Press, Leamington Spa, England.

Dispositif d'étanchéité pour assemblage oscillant

Le maintien de l'étanchéité au niveau de la portée d'extrémité d'un élément oscillant, par exemple d'un bras d'essieu, est difficile à réaliser, en raison notamment des exigences de la fabrication et du montage en série, du faible espace disponible, du milieu agressif dans lequel se trouve cette portée d'extrémité et des phénomènes vibratoires quasi-permanents auxquels l'ensemble est soumis.

Pour assurer cette étanchéité, il est prévu dans le brevet allemand 879 496 d'utiliser un joint élastique comprenant un voile ou âme qui peut notamment être tronconique et est interposé entre une bague extérieure et une bague intérieure avec lesquelles il est solidarisé. Mais ces joints, tels qu'ils sont montés actuellement ne permettent qu'imparfaitement d'obtenir l'étanchéité recherchée; de plus, ils s'usent rapidement et absorbent mal les efforts axiaux.

La présente invention a pour objet un dispositif d'étanchéité pour élément oscillant qui donne au contraire toute satisfaction.

Le dispositif d'étanchéité selon l'invention comprend un joint d'étanchéité du type ci-dessus et est caractérisé en ce que le joint est monté en étant déformé de manière que sa bague extérieure soit déplacée axialement par rapport à sa bague intérieure dans le sens correspondant à un redressement du voile du joint, en ce que l'une des bagues du joint comporte des créneaux ou cannelures engagés à l'intérieur de logements de forme complémentaire ménagés sur l'un des éléments de l'assemblage, ce qui solidarise en rotation le joint et cet élément, et en ce que le joint comporte au moins une lèvre annulaire continue au contact dudit élément de l'assemblage.

Du fait de sa déformation, chaque face latérale du joint est pressée sur l'un des éléments de l'assemblage et est ainsi maintenue en contact avec cet élément même si un certain déplacement axial relatif des deux éléments se produit. Etant solidaire de l'un des éléments, il suit cet élément lors d'une oscillation de l'assemblage. La lèvre maintient l'étanchéité malgré la présence des logements recevant les créneaux ou cannelures.

Les créneaux ou cannelures peuvent être prévus sur la région frontale de la bague interne ou bien à la périphérie de la bague externe, en s'étendant sur toute la largeur de cette périphérie ou sur une partie de celle-ci seulement.

Les logements ménagés sur l'un des éléments de l'assemblage pour recevoir les créneaux ou cannelures peuvent être formés par encochage de l'extrémité de cet élément ou être constitués par des alvéoles radiaux formés à cette extrémité par usinage ou par mandrinage.

La lèvre du joint peut être sensiblement radiale ou sensiblement axiale. Le joint peut également comporter à la fois une lèvre radiale et une lèvre axiale.

L'élément d'assemblage extérieur peut être constitué par une coupelle à collerette reliée élastiquement à un élément fixe et formant éventuellement palier pour le second élément d'assemblage.

On a décrit ci-après, à titre d'exemple non limitatif, un mode de réalisation du dispositif d'étanchéité selon l'invention avec référence au dessin annexé dans lequel:

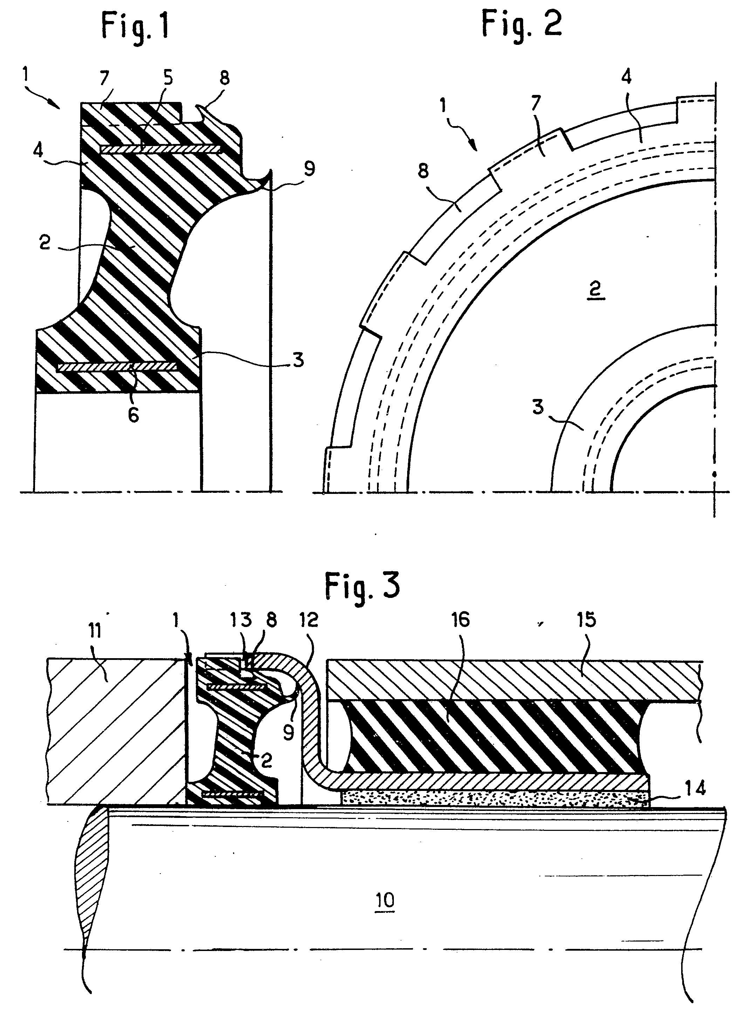

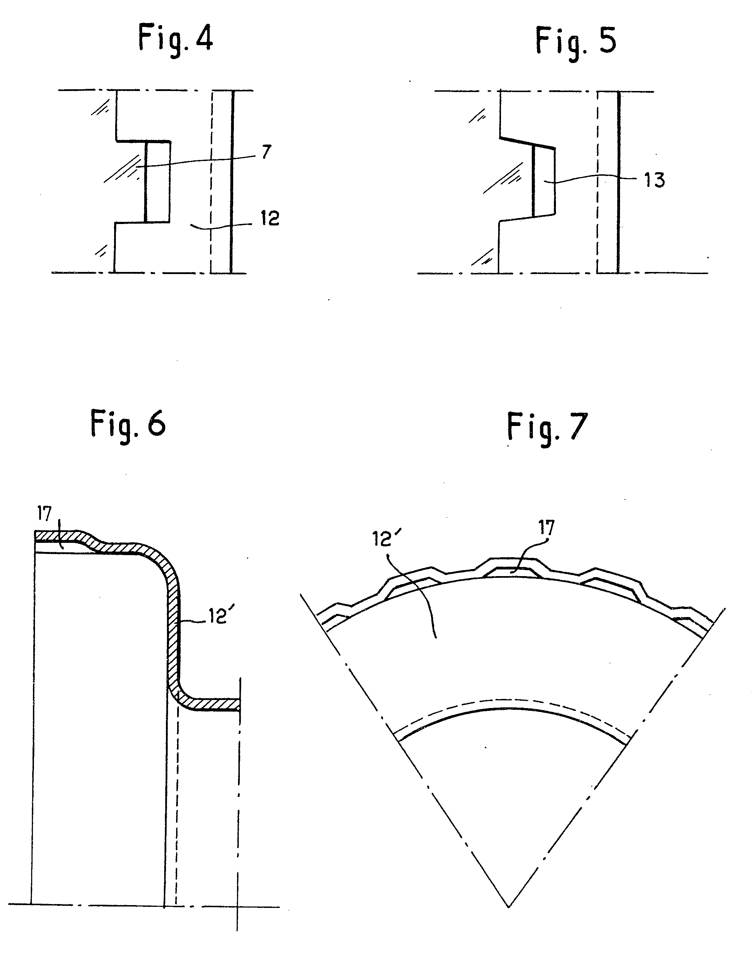

La Figure 1 est une vue en coupe axiale d'une partie du joint du dispositif; la Figure 2 est une vue en élévation d'une partie de ce joint; la Figure 3 est une vue en coupe axiale d'une partie du dispositif; la Figure 4 est une vue en élévation d'un détail de ce dispositif; la Figure 5 montre une variante de la Figure 4; la Figure 6 est une vue en coupe d'une partie d'une coupelle dans une variante; la Figure 7 est une vue en élévation d'une partie de cette coupelle.

Tel qu'il est représenté au dessin, le dispositif d'étanchéité selon l'invention comprend un joint, en matière élastique, qui est désigné d'une façon générale par la référence 1 et est constitué par un voile ou membrane tronconique 2 faisant corps avec une bague intérieure 3 et une bague extérieure 4; ces bagues sont rigidifiées par des inserts métalliques 5 et 6 qui sont noyés dans la masse et formés par deux bagues méplates concentriques.

La bague extérieure 4 du joint 1 comporte à sa périphérie une série de cannelures 7 qui peuvent être de forme rectangulaire (Figure 4) ou trapézoïdale (Figure 5). Ces cannelures ne s'étendent par sur toute la largeur de la bague et la partie qui en est exempte est munie d'une lèvre continue sensiblement radiale 8. Une lèvre continue 9 est prévue sur la face latérale de la bague 4 située du même côté que la lèvre 8.

Le joint 1 est monté sur un arbre oscillant 10 qui est solidaire d'un élément 11, constitué par exemple par un bras d'essieu supportant la roue d'un véhicule. Ce joint 1 est appliqué au contact de l'élément 11 et partiellement encastré dans une coupelle annulaire, à collerette, 12 qui est munie, à sa p"riperie d'encoches 13 dont la forme est complémentaire de celle des cannelures 7 du joint et dans lesquelles ces cannelures viennent se loger. Cette coupelle est montée sur l'arbre 10 par l'intermédiaire d'une bague de portée 14, par exemple en matériau anti-friction, et est reliée à un élément de structure transversal 15 par l'intermédiaire d'une bague en matière élastomère 16. Le montage est tel que le joint 1 soit comprimé et déformé, le voile 2 étant partiellement redressé par rapport à la position normale qu'il occupe lorsqu'il est à l'état libre; les lèvres 8 et 9 sont ainsi pressées contre la collerette.

On voit de la description qui précède que le joint 1 ne peut pivoter par rapport à la coupelle 12 et à l'arbre oscillant 10, ce qui évite un glissement qui engendrerait une usure des pièces en contact. Par ailleurs, du fait du montage du joint, les deux faces de celui-ci sont pressées respectivement contre l'élément 11 et, par l'intermédiaire de sa lèvre 9, contre la coupelle 12, même si la position relative de cet élément et de cette coupelle varie axialement. Cependant, un certain glissement tangentiel peut se produire entre le joint 1 et l'élément 11, ce qui limite la contrainte de torsion à laquelle le voile 2 peut être soumis et augmente ainsi la durée de vie du joint.

Le dispositif d'étanchéité qui vient d'être décrit assure une étanchéité périphérique entre les cannelures 7 et la paroi des encoches 13, entre la lèvre 8 et la collerette de la coupelle 12, ainsi qu'entre la lèvre 9 et le fond de cette collerette. Il assure également une étanchéité frontale au droit de l'élément 11 qui est appliqué contre la bague intérieure 3 ainsi qu'une étanchéité entre la portée de cette bague et l'arbre 10.

Dans la variante des Figures 6 et 7, l'embase de la cuvette 12' comporte des alvéoles périphériques 17 dans lesquels viennent se loger les cannelures 7 du joint.

Il va de soi que la présente invention ne doit pas être considérée comme limitée au mode de réalisation décrit et représenté, mais en couvre, au contraire, toutes les variantes. C'est ainsi en particulier, que les cannelures pourraient être ménagées sur la face frontale de la bague 3 et engagées dans des logements prévus dans la face latérale adjacente de l'élément 11.

## Revendications

1. Dispositif d'étanchéité pour assemblage oscillant qui comporte un joint élastique (1) comprenant un voile ou âme tronconique (2) interposé entre une bague intérieure (3) et une bague extérieure (4) avec lesquelles il fait corps, caractérisé en ce que le joint (1) est monté en étant déformé de manière que sa bague extérieure (4) soit déplacée axialement par rapport à sa bague intérieure (3) dans le sens correspondant à un redressement du voile (2) du joint, en ce que l'une des bagues (3 ou 4) du joint comporte des créneaux ou cannelures (7) engagées à l'intérieur de logements (13) de forme complémentaire ménagés sur l'un des éléments (12) de l'assemblage, ce qui solidarise en rotation le joint et cet élément (12), et en ce que le joint (1) comporte au moins une lèvre annulaire continue (8 ou 9) au contact dudit élément (12) de l'assemblage.

2. Dispositif selon la revendication 1, caractérisé en ce que les créneaux ou cannelures sont prévus sur la région frontale de la bague intérieure (3).

3. Dispositif selon la revendication 1, caractérisé en ce que les créneaux ou cannelures (7) sont prévus à la périphérie de la bague extérieure (4), en s'étendant sur toute la largeur de cette périphérie ou sur une partie de celle-ci seulement.

4. Dispositif selon l'une quelconque des revendications 1 à 3, caractérisé en ce que lesdits logements (13) sont formés par encochage de l'extrémité de l'élément d'assemblage (12).

5. Dispositif selon l'une quelconque des revendications 1 à 3, caractérisé en ce que lesdits logements (13) sont constitués par des alvéoles radiaux (17) formés à l'extrémité de l'élément d'assemblage par usinage ou par mandrinage.

6. Dispositif selon l'une quelconque des revendications 1 à 5 caractérisé en ce que la lèvre (8) du joint (1) est sensiblement radiale.

7. Dispositif selon l'une quelconque des revendications 1 à 5, caractérisé en ce que la lèvre (9) du joint (1) est sensiblement axiale.

8. Dispositif selon les revendications 6 et 7, caractérisé en ce que le joint comporte à la fois une lèvre radiale (8) et une lèvre axiale (9).

9. Dispositif selon l'une quelconque des revendications précédentes, caractérisé en ce que l'élément d'assemblage extérieur (12) est constitué par une coupelle à collerette reliée élastiquement à un élément fixe (15) et formant éventuellement palier pour le second élément d'assemblage (10).

10. Dispositif selon la revendication 9, caractérisé en ce qu'une bague anti-friction (14) est disposée entre la coupelle annulaire (12) et le second élément d'assemblage (10).

## Patentansprüche

1. Dichtungsvorrichtung für eine oszillierende Verbindung, die ein elastisches Dichtungsteil (1) aufweist, das aus einem kegelstumpfförmigen Mantel oder Steg (2) besteht, der zwischen einen inneren Ring (3) und einen äußeren Ring (4) eingeschaltet ist und mit diesen aus einem Stück besteht, dadurch gekennzeichnet, daß das Dichtungsteil (1) so angeordnet ist, daß es in einer Weise verformt wird, daß sein äußerer Ring (4) sich gegen den inneren Ring (3) axial in einer Richtung verschiebt, die einem Aufrichten des Mantels (2) des Dichtungsteils entspricht, daß der eine der Ringe (3) oder (4) des Dichtungsteils Einkerbungen oder Nuten (7) aufweist, die in Eingriff stehen mit dem Inneren von Aufnahmen (13) mit komplementärer Form, die in einem der Verbindungselemente (12) angeordnet sind, wodurch das Dichtungsteil und dieses Verbindungselement (12) drehfest miteinander verbunden sind, und daß das Dichtungsteil (1) mindestens eine ringförmige, durchgehende Lippe (8) oder (9) aufweist, die mit dem Verbindungselement (12) in Berührung steht.

2. Vorrichtung nach Anspruch 1, dadurch gekennzeichnet, daß die Einkerbungen oder Nuten an der Vorderseite des inneren Ringes (3) vorgesehen sind.

3. Vorrichtung nach Anspruch 1, dadurch gekennzeichnet, daß die Einkerbungen oder Nuten (7) am Umfang des äußeren Ringes (4) vorgesehen sind und sich über die ganze Breite des Umfanges oder nur einen Teil desselben erstrecken.

4. Vorrichtung nach einem der Ansprüche 1 bis 3, dadurch gekennzeichnet, daß die Aufnahmen (13) gebildet sind durch Ausschneiden des Randes des Verbindungselementes (12).

5. Vorrichtung nach einem der Ansprüche 1 bis 3, dadurch gekennzeichnet, daß die Aufnahmen (13) gebildet sind durch radiale Zellen (17), die am Rand des Verbindungselementes durch spa-nende Bearbeitung oder durch Aufdornen erzeugt sind.

6. Vorrichtung nach einem der Ansprüche 1 bis 5, dadurch gekennzeichnet, daß die Lippe (8) am Dichtungsteil (1) im wesentlichen radial ausgerichtet ist.

7. Vorrichtung nach einem der Ansprüche 1 bis 5, dadurch gekennzeichnet, daß die Lippe (9) am Dichtungsteil (1) im wesentlichen axial ausgerichtet ist.

8. Vorrichtung nach den Ansprüchen 6 und 7, dadurch gekennzeichnet, daß das Dichtungsteil zugleich eine radiale Lippe (8) und eine axiale Lippe (9) aufweist.

9. Vorrichtung nach einem der vorhergehenden Ansprüche, dadurch gekennzeichnet, daß das äußere Verbindungselement (12) gebildet ist durch eine mit einem Flansch versehene Schale, die elastisch mit einem festen Element (15) verbunden ist und gegebenenfalls ein Lager für das zweite Verbindungselement (10) bildet.

10. Vorrichtung nach Anspruch 9, dadurch gekennzeichnet, daß zwischen der ringförmigen Schale (12) und dem zweiten Verbindungselement (10) ein Antifriktionsring (14) angeordnet ist.

## Claims

1. Fluid-tight device for an oscillation assembly which comprises a resilient seal (1) incorporating a frustoconical web or core (2) interposed between an inner ring (3) and an outer ring (4) with which it is integral, characterised in this that the seal (1) is so mounted, while being deformed, that its outer ring (4) is axially displaced with respect to its inner ring (3) in the sense corresponding to a truing of the core (2) of the seal, in this that one of the rings (3 or 4) of the seal comprises castellations or corrugations (7) engaged within recesses (13) of complementary shape formed on one of the members (12) of the assembly, which secures the seal and this member (12) for rotation,

and in this that the seal (1) comprises at least one annular continuous lip (8 or 9) in contact with the said member (12) of the assembly.

2. A device according to claim 1, characterised in this that the castellations or corrugations are provided in a front zone of the inner ring (3).

3. Device according to claim 1, characterised in this that the castellations or corrugations (7) are provided on the periphery of the outer ring (4), and extend over the whole width of this periphery or over a part of the latter only.

4. Device according to any one of claims 1 to 3, characterised in this that the said recesses (13) are formed by notching the end of the assembly member (12).

5. Device according to any one of claims 1 to 3, characterised in this that the said recesses (13) are constituted by radial sockets (17) formed at the end of the assembly member by machining or by swaging.

6. Device according to one of claims 1 to 5, characterised in this that the said lip (8) of the seal (1) is substantially radial.

7. Device according to any one of claims 1 to 5, characterised in this that the lip (9) of the seal (1) is substantially axial.

8. Device according to claims 6 and 7, characterised in this that the seal comprises both a radial lip (8) and an axial lip (9).

9. Device according to any one of the preceding claims, characterised in this that the outer assembly member (12) is constituted by a flanged sleeve resiliently connected to a fixed member (15) and possibly forming a bearing for the second member (10) of the assembly.

10. Device according to claim 9, characterised in this that an anti-friction ring (14) is disposed between the annular sleeve (12) and the second assembly member (10).

Fig. 1

Fig. 2

Fig. 3

# Fig. 4

7

12

# Fig. 5

13

# Fig. 6

17

12'

# Fig. 7

12'

17